# EUROPEAN PATENT SPECIFICATION

(11) **EP 4 541 761 B1**
(45) Date of publication and mention of the grant of the patent: **11.02.2026**
(21) Application number: 24460030.0
(22) Date of filing: 14.10.2024
(51) Int. Cl.: B68B 9/00, B68C 1/00, B62B 3/00

(54) **SADDLE TRUNK**
SATTELKOFFER
COFFRE DE SELLE

(30) Priority: 16.10.2023 PL 44639323
(43) Date of publication of application: 23.04.2025
(73) Proprietor: Hussaria Spólka z Ograniczona Odpowiedzialnoscia, 37-450 Stalowa Wola (PL)
(72) Inventor: Pawlowski, Wojciech, 37-450 Stalowa Wola (PL)

(56) References cited:
- WO-A1-2017/056254
- CN-U- 207 061 859

## Description

The subject of the invention is a saddle trunk designed for people practicing equestrian sports, especially for transporting equestrian equipment to sports competitions.

Known and commonly used by riders are trunks for transporting equestrian equipment, which take the form of a rectangular prism equipped with wheels, with at least two of them mounted on rotary axles and equipped with a brake. The trunk has a front-mounted door, usually locked with a key. Known trunks are also most often equipped with double door mounted on hinges at the front of the trunk, which can be locked with a key. Inside the trunk, there are transverse and longitudinal partitions creating compartments of various sizes, as well as horizontal supports for placing saddles, as well as hooks for bridles. Known trunks have handles located on the side walls to facilitate their movement. Known trunks are made of aluminum or steel, including stainless steel. From the description of Polish utility model Ru.069918, a wardrobe for equestrian equipment is also known in the form of a rectangular prism, mounted on wheels equipped with a brake, which is closed at the front by several doors, and inside it there are transverse and longitudinal partitions separating compartments of different sizes. It is characterized by the fact that the body of the wardrobe is modular, in which perpendicular modules, separately, on the sides, are connected to each other with locks, and in the bottom of one module there is a tilting support, and its position is blocked each time by a mounted latch.

CN 207 061 859 U discloses a saddle box in the form of a rectangular prism equipped with side handles, sets of wheels, with at least two of them mounted on rotary vertical axles, door, and inside it there are transverse and longitudinal partitions creating compartments of various sizes, as well as supports for saddles.

Known trunks have a significant weight, often reaching 100 kg, which definitely makes their movement difficult, often requiring the cooperation of several people. This need arises when moving a trunk over often uneven ground, especially when rolling the trunk onto a loading platform of a truck or trailer. This is a fundamental flaw of known saddle trunk structures.

The aim of the invention is to eliminate the indicated flaw by developing an easily movable saddle trunk structure.

A saddle trunk according to the claimed invention is defined in claim 1. Dependent claims 2-13 define particular embodiments of the saddle trunk according to the claimed invention.

Saddle trunk in the form of a rectangular prism equipped with side handles, sets of wheels, with at least two of them mounted on rotary vertical axles and equipped with brake, door, and inside it there are transverse and longitudinal partitions creating compartments of various sizes, as well as supports for saddles, and the trunk itself is made of aluminum profiles and sheets, according to the invention, wherein at the bottom of the trunk, on the side opposite the door, it has a recess in which a drive unit is located, consisting of a battery, an electric motor, a differential, and drive wheels mounted on driven axles, wherein the diameter of the drive wheels is, preferably, larger than the swivel wheels located on the opposite side, placed in housings mounted on vertical rotary axles, and on the side of the swivel wheels, above the door, the trunk has an extension closed with a cover with a recess in which there is a panel for controlling the movement of the saddle trunk, consisting of a main drive switch, a drive direction switch, a switch for the power supplied to the drive unit and a steering wheel with a lever for smooth speed regulation. Preferably, the trunk door is single-leaf and, particularly preferably, is equipped with a mirror on the inside. Also preferably, the trunk has two supports for saddles which are preferably foldable. Also preferably, on the side walls of the trunk, there are two pairs of retractable handles located at the top and bottom. Additionally and preferably, ventilation openings are located in the side walls and door. Furthermore, preferably, a lamp is placed inside the trunk with a switch located preferably on the control panel. Preferably, the tread of the drive wheels is flat. Preferably, inside the trunk, at its bottom, there are a fixed container and a removable container, and a pull-out drawer is located at the top. Preferably the door and cover are closed with locks.

Such a trunk, because it is equipped with a drive, can be moved by one person regardless of the quality of the surface on which it is moving and the inclination of loading platforms commonly used in transport vehicles and trailers by riders.

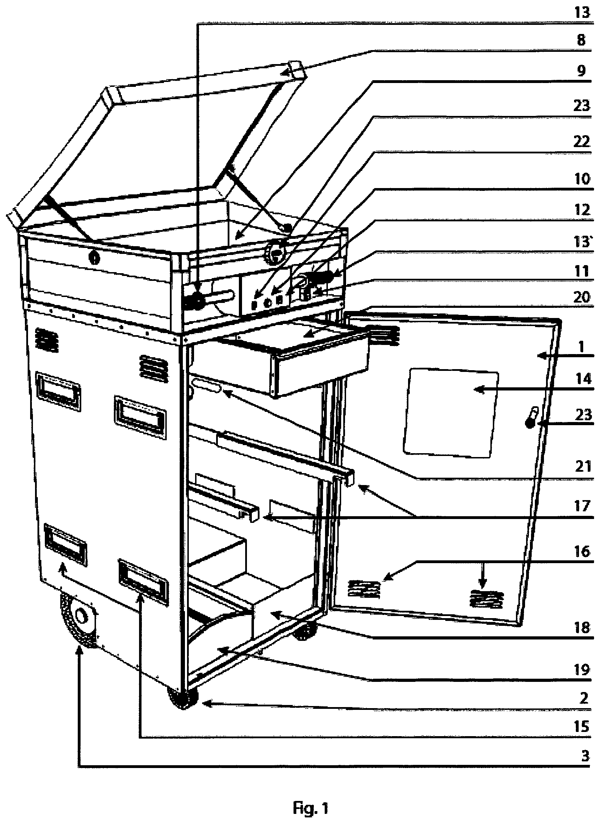

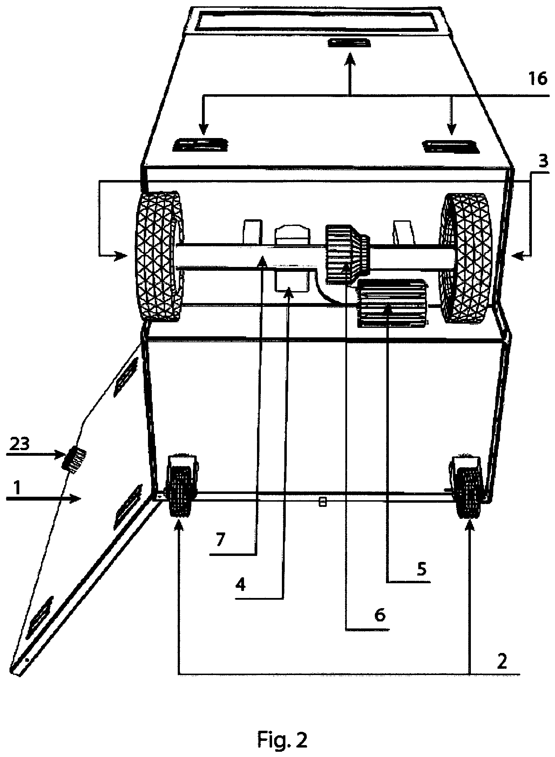

The subject of the invention is shown in the drawing, in which fig. 1 shows an axonometric view of the trunk with open door, and fig. 2 shows an axonometric view of the trunk from below.

### Embodiment:

The saddle trunk is made of aluminum profiles and sheets and takes the form of a single-leaf door 1 of a cuboid mounted on wheels 2, 3, with wheels 2 mounted in fittings on rotary vertical axes and equipped with a brake, and the other two wheels 3 are driven. At the bottom of the trunk, on the opposite side of door 1, there is a recess where the drive unit is located, consisting of battery 4, electric motor 5, differential 6, and drive wheels 3 located on driven axles 7, with the diameter of drive wheels 3 being larger than the swivel wheels 2 located on the opposite side, and the wheels 3 themselves have a flat tread. On the side of the swivel wheels 2, above the door 1, the trunk has a closable cover 8 with an extension 9 with a recess, in which there is a control panel for the movement of the saddle trunk, composed of a main drive switch 10, a drive direction switch 11, a power switch 12 supplying power to the drive unit, and a steering wheel 13 with a lever 13' for smooth speed adjustment. The door 1 of the trunk is single-leaf and is equipped with a mirror 14 on the inside. On the side walls of the trunk, there are two pairs of retractable handles 15 and ventilation openings 16, which are also located in the lower part of the door 1 of the trunk, at the top and at the bottom Inside the trunk, there are two foldable supports 17 for saddles and a fixed container 18 located on its bottom and a removable container 19, and at the top - a pull-out drawer 20. Inside the trunk, there is a lighting lamp 21 controlled by switch 22 located on the control panel. The cover 8 has extensions 9 and door 1 are equipped with locks 23.

## Claims

1. Saddle trunk in the form of a rectangular prism equipped with side handles (15), sets of wheels (2, 3), with at least two of them mounted on rotary vertical axles and equipped with brake, door (1), and inside it there are transverse and longitudinal partitions creating compartments of various sizes, as well as supports (17) for saddles, **characterized in that** the trunk itself is made of aluminum profiles and sheets, and **in that**, at the bottom of the trunk, on the opposite side of door (1), there is a recess where a drive unit is located, consisting of battery (4), electric motor (5), differential (6), and drive wheels (3) located on driven axles (7), and on the side of the swivel wheels (2), above the door (1), the trunk has a closable cover (8) with an extension (9) with a recess, in which there is a control panel for the movement of the saddle trunk, composed of a main drive switch (10), a drive direction switch (11), a power switch (12) supplying power to the drive unit, and a steering wheel (13) with a lever (13') for smooth speed adjustment.

2. Trunk according to claim 1, **characterized in that** the diameter of the drive wheels (3) is larger than of the swivel wheels (2) located on the opposite side.

3. Trunk according to claim 1, **characterized in that** the tread of the drive wheels (3) is flat.

4. Trunk according to claim 1, **characterized in that** the door (1) of the trunk is single-leaf.

5. Trunk according to claim 1 or 4, **characterized in that** the door (1) is provided with a mirror (14) on the inside.

6. Trunk according to claim 1, **characterized in that** on the side walls of the trunk, there are two pairs of retractable handles located at the top and bottom (15).

7. Trunk according to claim 1, **characterized in that** ventilation openings (16) are located in the side walls and door (1).

8. Trunk according to claim 1, **characterized in that** it has two supports (17) for saddles.

9. Trunk according to claim 1 or 8, **characterized in that** the supports (17) are foldable.

10. Trunk according to claim 1, **characterized in that** a lighting lamp (21) is placed inside the trunk.

11. Trunk according to claim 10, **characterized in that** a switch (22) of the lamp (20) is located on the control panel.

12. Trunk according to claim 1, **characterized in that** inside the trunk, at its bottom, there is a fixed container (18) and a removable container (19), and at the top a pull-out drawer (20).

13. Trunk according to claim 1, **characterized in that** the door and cover are closed with locks (23).

## Patentansprüche

1. Sattelkoffer in Form eines rechteckigen Prismas, ausgestattet mit seitlichen Griffen, Radsätzen, wobei mindestens zwei davon auf drehbaren vertikalen Achsen montiert und mit einer Bremse versehen sind, einer Tür, und in deren Innerem sich quer- und längsverlaufende Trennwände zur Bildung von Fächern unterschiedlicher Größe sowie Sattelhalterungen befinden, wobei die Truhe selbst aus Aluminiumprofilen und -blechen gefertigt ist, **dadurch gekennzeichnet, dass** sich am Boden der Truhe, auf der der Tür (1) gegenüberliegenden Seite, eine Ausnehmung befindet, in der die Antriebseinheit angeordnet ist, bestehend aus einer Batterie (4), einem Elektromotor (5), einem Differential (6) sowie Antriebsrädern (3), die auf angetriebenen Achsen (7) angeordnet sind, und dass sich auf der Seite der schwenkbaren Räder (2), oberhalb der Tür (1), eine verschließbare Abdeckung (8) mit einer Verlängerung (9) mit einer Ausnehmung befindet, in der ein Bedienfeld zur Steuerung der Bewegung der Truhe angeordnet ist, bestehend aus einem Hauptantriebsschalter (10), einem Fahrtrichtungsschalter (11), einem Einschaltschalter (12) zur Versorgung der Antriebseinheit sowie einem Lenkrad (13) mit einem Hebel (13') zur stufenlosen Geschwindigkeitsregelung.

2. Koffer nach Anspruch 1, **dadurch gekennzeichnet, dass** der Durchmesser der Antriebsräder (3) größer ist als der der auf der gegenüberliegenden Seite angeordneten schwenkbaren Räder (2).

3. Koffer nach Anspruch 1, **dadurch gekennzeichnet, dass** das Profil der Antriebsräder (3) flach ist.

4. Koffer nach Anspruch 1, **dadurch gekennzeichnet, dass** die Tür (1) einflügelig ist.

5. Koffer nach Anspruch 1 oder 4, **dadurch gekennzeichnet, dass** die Tür (1) an ihrer Innenseite mit einem Spiegel (14) versehen ist.

6. Koffer nach Anspruch 1, **dadurch gekennzeichnet, dass** sich an den Seitenwänden der Truhe jeweils zwei Paare von ausziehbaren Griffen befinden, die oben und unten angeordnet sind (15).

7. Koffer nach Anspruch 1, **dadurch gekennzeichnet, dass** in den Seitenwänden und in der Tür (1) Lüftungsöffnungen (16) vorgesehen sind.

8. Koffer nach Anspruch 1, **dadurch gekennzeichnet, dass** sie zwei Sattelhalterungen (17) aufweist.

9. Koffer nach Anspruch 1 oder 8, **dadurch gekennzeichnet, dass** die Sattelhalterungen (17) klappbar sind.

10. Koffer nach Anspruch 1, **dadurch gekennzeichnet, dass** im Inneren der Truhe eine Beleuchtungslampe (21) angeordnet ist.

11. Koffer nach Anspruch 1 oder 10, **dadurch gekennzeichnet, dass** sich der Schalter (22) der Lampe (20) auf dem Bedienfeld befindet.

12. Koffer nach Anspruch 1, **dadurch gekennzeichnet, dass** sich im Inneren der Truhe, an ihrem Boden, ein fest montierter Behälter (18) und ein herausnehmbarer Behälter (19) sowie im oberen Bereich eine ausziehbare Schublade (20) befinden.

13. Koffer nach Anspruch 1, **dadurch gekennzeichnet, dass** Tür und Abdeckung mit Schlössern (23) verschlossen sind.

## Revendications

1. Coffre de selles sous la forme d'un prisme rectangulaire, équipé de poignées latérales, d'ensembles de roues, dont au moins deux sont montées sur des axes verticaux rotatifs et munies d'un frein, d'une porte, et à l'intérieur duquel se trouvent des cloisons transversales et longitudinales formant des compartiments de différentes dimensions, ainsi que des supports pour selles, le coffre étant réalisé en profilés et tôles d'aluminium, **caractérisé en ce qu'**au fond du coffre, du côté opposé à la porte (1), est ménagée une cavité dans laquelle est disposé un groupe d'entraînement comprenant une batterie (4), un moteur électrique (5), un différentiel (6) et des roues motrices (3) montées sur des essieux entraînés (7), et que, du côté des roues pivotantes (2), au-dessus de la porte (1), le coffre est pourvu d'un couvercle refermable (8) avec ineune extension (9) avec un évidement dans lequel est disposé un panneau de commande du déplacement du coffre, comprenant un interrupteur principal de l'entraînement (10), un inverseur du sens de marche (11), un interrupteur d'alimentation (12) alimentant l'unité d'entraînement, ainsi qu'un volant de direction (13) avec un levier (13') pour le réglage progressif de la vitesse.

2. Coffre selon la revendication 1, **caractérisé en ce que** le diamètre des roues motrices (3) est supérieur à celui des roues pivotantes (2) situées du côté opposé.

3. Coffre selon la revendication 1, **caractérisé en ce que** la bande de roulement des roues motrices (3) est plate.

4. Coffre selon la revendication 1, **caractérisé en ce que** la porte (1) du coffre est à un seul battant.

5. Coffre selon la revendication 1 ou 4, **caractérisé en ce que** la porte (1) est munie d'un miroir (14) du côté intérieur.

6. Coffre selon la revendication 1, **caractérisé en ce que**, sur les parois latérales du coffre, sont disposées deux paires de poignées escamotables situées en partie supérieure et inférieure (15).

7. Coffre selon la revendication 1, **caractérisé en ce que** des ouvertures de ventilation (16) sont disposées dans les parois latérales et dans la porte (1).

8. Coffre selon la revendication 1, **caractérisé en ce qu'**il comporte deux supports (17) pour selles.

9. Coffre selon la revendication 1 ou 8, **caractérisé en ce que** les supports (17) sont pliables.

10. Coffre selon la revendication 1, **caractérisé en ce qu'**une lampe d'éclairage (21) est placée à l'intérieur du coffre.

11. Coffre selon la revendication 1 ou 10, **caractérisé en ce que** l'interrupteur (22) de la lampe (20) est situé sur le panneau de commande.

12. Coffre selon la revendication 1, **caractérisé en ce qu'**à l'intérieur du coffre, dans sa partie inférieure, se trouvent un récipient fixe (18) et un récipient amovible (19), et dans la partie supérieure - un tiroir coulissant (20).

13. Coffre selon la revendication 1, **caractérisé en ce que** la porte et le couvercle sont fermés à l'aide de serrures (23).
